# EUROPÄISCHE PATENTANMELDUNG

(11) **EP 4 257 785 A1**
(43) Veröffentlichungstag der Anmeldung: **11.10.2023**
(21) Anmeldenummer: 23020126.1
(22) Anmeldetag: 15.03.2023
(51) Int. Cl.: E05B 47/06, H02K 1/2798, H02K 21/24, E05B 47/00, G07C 9/00

(54) **ENERGIEWANDIER ZUR ERZEUGUNG ELEKTRISCHER ENERGIE FÜR EINE SCHLIESSEINRICHTUNG**

(30) Priorität: 28.03.2022 AT 782022
(71) Anmelder: EVVA Sicherheitstechnologie GmbH, 1120 Wien (AT)
(72) Erfinder: Enne, Reinhard J., 1120 Wien (AT); Herza, Claus, 2380 Perchtoldsdorf (AT)
(74) Vertreter: Keschmann, Marc

(57) **Zusammenfassung**

Ein Energiewandler zur Erzeugung elektrischer Energie für eine Schließeinrichtung umfasst eine Handhabe (4) zur Betätigung der Schließeinrichtung und einen von der Handhabe (4) angetriebenen elektrischen Generator (9), wobei der elektrische Generator (9) als Axialfluss-Permanentmagnet-Generator mit wenigstens einem Stator und einem relativ dazu drehbar gelagerten Rotor (13a, 13b) ausgebildet ist und der Rotor (13a, 13b) als Schwungrad ausgebildet ist oder mit einem Schwungrad zusammenwirkt.

## Beschreibung

Die Erfindung betrifft einen Energiewandler zur Erzeugung elektrischer Energie für eine Schließeinrichtung, umfassend eine Handhabe zur Betätigung der Schließeinrichtung und einen von der Handhabe angetriebenen elektrischen Generator.

Die Erfindung betrifft weiters eine Schließeinrichtung umfassend:
- ein Schließglied für die Betätigung eines Verriegelungselements,
- eine elektrisch betätigbare Kupplung zum wahlweisen Verbinden oder Trennen einer Drehbewegung des Zylinderkerns mit dem bzw. vom Schließglied,
- eine elektronische Authentifizierungseinrichtung zum Authentifizieren einer elektronischen Zutrittsberechtigung, die mit der Kupplung zusammenwirkt, um die Kupplung bei Vorliegen einer Zutrittsberechtigung zu betätigen, und
- einen Energiewandler, der die Authentifizierungseinrichtung und/oder die Kupplung mit elektrischer Energie versorgt, wobei die Handhabe mit dem Zylinderkern drehgekoppelt ist.

Elektrische oder elektronische Schlösser, insbesondere Zylinderschlösser enthalten in der Regel zusätzlich zu mechanischen Verriegelungen, welche mit konventionellen Schlüsseln mechanisch sperrbar sind, oder an Stelle einer solchen mechanischen Verriegelung wenigstens einen elektromagnetisch oder motorisch betätigbaren Verriegelungsmechanismus, welcher erst nach einer elektronischen Identifikationsprüfung freigegeben wird. Die elektronische Authentifizierungseinrichtung zur Identifikationsüberprüfung wirkt hierbei meist mit geeigneten Identifikationsmedien drahtlos oder drahtgebunden zusammen, wobei in der elektronischen Authentifizierungseinrichtung eine Überprüfung erfolgt, ob das jeweilige Identifikationsmedium die Berechtigung zum Sperren des Schlosses aufweist. Nach erfolgreicher Überprüfung der Identität erfolgt dann die Freigabe des Schlosses.

Zur Energieversorgung derartiger elektrischer bzw. elektronischer Verriegelungen ist in der Regel eine ständige Energieversorgung des Schlosses und oft auch des Schlüssels erforderlich und es ist daher neben dem Aufwand für eine derartige ständige Energieversorgung auch dafür Sorge zu tragen, dass eine unterbrechungsfreie Stromversorgung zur Verfügung steht, um die Funktion des Schlosses in jeder Situation aufrecht zu erhalten.

Elektrische oder elektronische Schlösser können nun in beliebiger Weise mit Energie versorgt werden. Neben der Möglichkeit eines Netzanschlusses oder einer Stützbatterie sind auch bereits Vorschläge bekannt geworden, bei welchen das Schloss oder der Schlüssel einen Wandler zum Wandeln von mechanischer in elektrische Energie aufweist. Derartige Wandler sind beispielsweise als elektrische Generatoren ausgebildet. Das bewegliche Bauteil des Generators kann beispielsweise als Schwungrad ausgebildet sein, wie dies aus der EP 1039074 A1 bekannt geworden ist. Durch eine derartige Ausbildung wird eine autarke Energieversorgung sichergestellt, da die vom Schwungradgenerator erzeugte elektrische Energie in einem Energiespeicher zwischengespeichert werden kann und im Bedarfsfall dem elektrischen Schaltkreis für die Identifikationsprüfung bzw. für die elektrische Betätigung des Schlosses zur Verfügung gestellt wird.

Weiters ist es bekannt geworden, gesonderte Beschläge für die Energiegewinnung zu verwenden. Eine derartige Ausbildung ist beispielsweise der EP 462 316 A1 zu entnehmen. Bei der bei diesem Schließzylinder vorgesehenen elektrischen Verriegelungseinrichtung wird ein Doppelschließzylinder verwendet, welcher an einer Seite einen Drehknauf trägt. Durch Verdrehen des Drehknaufes wird die elektrische Energie erzeugt, welche in der Folge die zur Entriegelung eines elektromagnetisch betätigbaren Sperrstiftes erforderliche Energie zu liefern in der Lage ist. In diesem Zusammenhang wurde bereits vorgeschlagen, den Sperrstift in einer Weise anzuordnen, dass ein vorbestimmter Drehweg des Schlüssels ohne Blockade durch den elektromagnetisch betätigbaren Sperrstift ermöglicht wird, und es wird auf diese Weise ein Teilweg der Drehbewegung eines Schlüssels zur Energieerzeugung herangezogen.

Weitere Ausbildungen, bei welchen elektrische Energie aus einer Drehbewegung der Handhabe, wie z.B. des Türknaufes oder des Drückers, gewonnen wird, sind aus der DE 102004052802 A1, FR 2728613 A1 und der US 3733861 A bekannt geworden.

Die EP 1723614 B1 beschreibt einen elektronischen Schließzylinder mit einem Knauf, in dem ein elektrischer Generator angeordnet ist, der eine Betätigung des Knaufes in elektrische Energie umsetzt.

Nachteilig bei den herkömmlichen Energiewandlern, die elektrische Energie aus einer Drehbewegung des Betätigungselements gewinnen, ist die mangelnde Energieausbeute. Bei solchen Energiewandlern steht man vor dem Problem, eine relativ kleine und über einen kurzen Zeitraum erfolgende Drehbewegung der Handhabe in ausreichend elektrische Energie umzuwandeln, die den Betrieb der Schließeinreichung während mindestens eines Sperrvorgangs gewährleisten soll. Gleichzeitig muss der Energiewandler kleinbauend ausgeführt sein, um in einen Beschlag oder einen Schließzylinder integriert werden zu können.

Die bekannten Wandlerprinzipien beruhen auf rotierenden Generatoren, bei denen durch Bewegungsinduktion in Spulen mit dem Magnetfeld von Dauermagneten elektrische Energie aus mechanischer Energie gewonnen wird. Dabei wird das Magnetfeld üblicherweise durch weichmagnetische Strukturen im stehenden und rotierenden Teil des Generators geführt, wobei in modernen Konstruktionen Hochleistungsdauermagnete auf dem rotierenden Teil verbaut sind und die Spulen in den weichmagnetischen Rückschlussteilen des stehenden Teiles untergebracht sind. Dabei sind die Rotoren im Regelfall walzenförmig mit radial geführtem Magnetfeld ausgeführt, deren Länge größer oder gleich dem Durchmesser ist. Diese Bauformen geben eine Wechselspannung ab, die in weiten Grenzen in ihren Amplituden drehzahlproportional verläuft und meist über mehrere Spulenstränge (Drehstromprinzip) abgegeben wird. Durch die Topologie der weichmagnetischen Magnetfeldführung entstehen pulsierende parasitäre Momentensprünge durch den sogenannten Reluktanzeffekt, der sich zufolge der Modellgesetze bei Verkleinerung des Generators immer stärker dahingehend auswirkt, dass der rotierende Wandler bei geringeren Drehmomenten die Momentensprünge nicht mehr überwinden kann und so vorzeitig stehen bleibt, was wiederrum zu deutlichen Energieeinbußen führt.

Für die Minimierung von elektrischen Verlusten wäre es aber von Vorteil, wenn der Wandler möglichst lange bewegt wird, da über die Zeit verlustarme elektrische Energie entnommen werden kann. Die Verluste am Innenwiderstand des Generators sind proportional zum Quadrat des Stroms. Wenn also die Energie beispielsweise in einem Drittel der Zeit, also mit dem 3-fachen Strom entnommen werden müsste, dann würde diese Verlustleistung auf das 9-fache steigen. Bei kleinen Generatoren stellt diese Verlustleistung im Wesentlichen die elektrische Verlustleistung des Generators dar.

Die vorliegende Erfindung zielt daher darauf ab, einen Energiewandler für Schließeinrichtungen dahingehend zu verbessern, dass die oben genannten Nachteile überwunden werden können. Insbesondere soll ein Energiewandler geschaffen werden, welcher auch bei kleinbauender Ausführung eine höhere Energieentnahme ermöglicht und einen verbesserten Wirkungsgrad aufweist.

Zur Lösung dieser Aufgabe sieht die Erfindung bei einem Energiewandler der eingangs genannten Art im Wesentlichen vor, dass der elektrische Generator als Axialfluss-Permanentmagnet-Generator mit wenigstens einem Stator und einem relativ dazu drehbar gelagerten Rotor ausgebildet ist und der Rotor als Schwungrad ausgebildet ist oder mit einem Schwungrad zusammenwirkt.

Dadurch, dass der Generator als Axialfluss-Permanentmagnet-Generator ausgebildet ist, kann das sogenannte Axialfeldprinzip ausgenützt werden, bei dem die Magnetfeldführung nicht radial, sondern in Achsrichtung erfolgt. Dies bedeutet, dass die Magnetfeldlinien nicht wie bei rotierenden Maschinen üblich radial zur Rotations- bzw. Längsachse verlaufen, sondern im Wesentlichen parallel dazu. Durch die Anordnung wird zunächst der Vorteil erzielt, dass parasitäre Reluktanzmomente vermieden werden und alle Spulen auf dem Stator angebracht sind, wodurch bewegte Kontakte vermieden werden können. Ebenso können Stromwender oder Bürsten entfallen, welche verschleißbedingt ausgetauscht werden müssten. Der Wandler benötig aus diesen Gründen keine Wartung und es sind Kontaktprobleme an bewegten Teilen, Bürsten oder Stromwender somit ausgeschlossen.

Gemäß einer bevorzugten Ausführungsform weist der Stator des Generators einen Spulenträger mit um eine Drehachse des Rotors verteilt angeordneten Induktionsspulen auf, deren Spulenachsen parallel zur Drehachse verlaufen. Der Rotor kann hierbei bevorzugt um die Drehachse verteilt angeordnete Permanentmagnete aufweisen, wobei in Umfangsrichtung aufeinanderfolgende Permanentmagnete bevorzugt eine abwechselnde axiale Polarität aufweisen.

Die Energieausbeute kann dabei gemäß einer bevorzugten Weiterbildung dadurch noch weiter verbessert werden, dass der Rotor zwei koaxial angeordnete Rotorelemente aufweist, zwischen denen der Stator angeordnet ist, wobei jedes Rotorelement um die Drehachse verteilt angeordnete Permanentmagnete aufweist.

Bei einer derartigen bevorzugten Ausgestaltung des Axialfluss-Permanentmagnet-Generators können die Permanentmagnete am jeweiligen Rotor, d.h. am oberen und unteren Magnetrückschluss, mit der Welle fix verbunden sein. Dazwischen liegt der Spulenträger mit den Spulen im Luftspalt zwischen den Magnetrückschlüssen, die bevorzugt keinerlei Material mit erhöhter magnetischer Leitfähigkeit aufweisen, was die parasitäre Reluktanz-Momentenbildung vermeidet. Hierbei ist es vorteilhaft, wenn auch die verwendeten Gehäuseschrauben aus nichtmagnetischem Material (z.B. nicht magnetischen Metallen oder Kunststoff) bestehen.

Die Spulenweite (Außendurchmesser) der Spulen kann an die in Umfangsrichtung gemessene Erstreckung der einzelnen Permanentmagneten angepasst sein, d.h. beispielsweise bei gleicher Anzahl von Spulen und Permanentmagneten stimmt diese im Wesentlichen überein. Bevorzugt wird die Anzahl der Spulen und die Anzahl der Permanentmagneten je Rotor gleich gewählt, oder eines davon beträgt ein ganzzahliges Vielfaches des jeweils anderen.

Es ist vorteilhaft, die Magnete mit axial abwechselnder Magnetisierung auf einem Rotor zu fixieren, da das Magnetfeld nicht nur schwellend, sondern mit doppelter Amplitude wechselnd auf die Spulen wirkt, wie dies einer bevorzugten Ausführung der Erfindung entspricht. Dies führt zu einer weiteren Erhöhung der Ausgangsspannung.

Weiters bevorzugt werden alle vorhandenen Spulen so miteinander verschalten, dass sich die Spannungen der einzelnen Spulen aufsummieren und eine Einphasenwechselspannung als Summe der einzelnen Spulenspannungen abgenommen werden kann.

Die Ausbildung des Generators als Axialfluss-Permanentmagnet-Generator erlaubt eine scheibenförmige Rotorgestaltung, wodurch sich ein erhöhtes Massenträgheitsmoment ergibt, welches als Schwungradspeicher wirkt und so über die eigentliche Betätigungszeit hinaus durch den Nachlauf Energie zu gewinnen ermöglicht. Der Rotor des Generator ist daher erfindungsgemäß als Schwungrad ausgebildet. Alternativ kann vorgesehen sein, dass der Rotor mit einem Schwungrad zusammenwirkt. Im Falle von zwei Rotorelementen, zwischen denen sich der Spulenträger befindet, wie oben beschrieben, ist jedes der beiden Rotorelemente bevorzugt scheibenförmig ausgebildet und daher als Schwungrad ausgebildet. Im Rahmen der Erfindung ist ein Rotor als scheibenförmig zu betrachten, wenn das Verhältnis von Durchmesser bzw. Hüllkreisdurchmesser zu axialer Dicke wenigstens 2:1, vorzugsweise wenigstens 4:1 oder vorzugsweise wenigstens 6:1, beträgt.

Die erfindungsgemäße Ausbildung sieht vor, dass der Generator von der Handhabe einer Schließeinrichtung angetrieben wird. Für die Bewegung einer Handhabe, wie z.B. eines Türdrückers oder eines Türknaufs, ist es charakteristisch, dass diese z.B. für ein Öffnen der Schließeinrichtung in einer Betätigungsrichtung betätigt wird, worauf eine Rückstellung in entgegengesetzter Richtung erfolgt. Um die vom Generator bereitgestellte elektrische Energie zu maximieren, ist es wünschenswert, beide Bewegungsrichtungen für den Antrieb des Generators auszunutzen. Zu diesem Zweck sieht eine bevorzugte Weiterbildung der Erfindung vor, dass die Handhabe über ein Getriebe mit dem wenigstens einen Rotor des Generators gekoppelt ist, welches ein Umschaltelement aufweist, um beim Wechsel der Bewegungsrichtung der Handhabe die Rotationsrichtung des Rotors beizubehalten.

Vorzugweise umfasst das Getriebe hierbei ein von der Handhabe zu einer Hin- und Herbewegung angetriebenes gezahntes Eingriffsmittel und ein mit dem Rotor des Generators drehbar gekoppeltes Gegeneingriffsmittel, wobei das gezahnte Eingriffsmittel einen ersten gezahnten Abschnitt und einen parallel dazu verlaufenden, gegengleich gezahnten zweiten Abschnitt aufweist, und das Gegeneingriffsmittel für die Hinbewegung über einen ersten Drehwinkel mit dem ersten gezahnten Abschnitt und für die Herbewegung über einen zweiten Drehwinkel mit dem zweiten gezahnten Abschnitt in Eingriff steht.

Die Umsetzung der Hin- und Herbewegung der Handhabe in eine rotierende Bewegung des Generators erfolgt somit nach Art eines Zahnstangengetriebes. Um mit Hilfe des Zahnstangengetriebes bei einen Richtungswechsel der Linearbewegung keine Änderung der Rotationsrichtung des Rotors zu bewirken, umfasst das Getriebe zwei gezahnte Abschnitte, deren Zahnung gegengleich ausgeführt ist, wobei das Gegeneingriffsmittel abwechselnd mit dem ersten gezahnten Abschnitt und mit dem zweiten gezahnten Abschnitt in Eingriff steht. Dabei erfolgt der Eingriff in den ersten gezahnten Abschnitt für die Hinbewegung über einen ersten Drehwinkel des Gegeneingriffsmittels und der Eingriff in den zweiten gezahnten Abschnitt für die Herbewegung über einen zweiten Drehwinkel des Gegeneingriffsmittels. Der erste und der zweite Drehwinkel sind bevorzugt gleich groß und können ≤ 360° oder ≥ 360° betragen und kann insbesondere auch mehrere Drehungen umfassen.

In bevorzugter Weise ist das Gegeneingriffsmittel als Zahnrad mit einer Außenverzahnung ausgebildet.

Wie bereits erwähnt umfasst das Eingriffsmittel einen ersten gezahnten Abschnitt und einen parallel dazu verlaufenden, gegengleich gezahnten zweiten Abschnitt. Bevorzugt ist in diesem Zusammenhang vorgesehen, dass der erste und der zweite gezahnte Abschnitt einstückig miteinander ausgebildet sind, sodass beispielsweise eine Herstellung des Gegeneingriffsmittels als Spritzgussteil möglich ist. Die Zähne des ersten Abschnitts und die Zähne des zweiten Abschnitts weisen zueinander, wobei die Zahnreihe des ersten Abschnitts und die Zahnreihe des zweiten Abschnitts in einem solchen Normalabstand voneinander angeordnet sind, dass das Gegeneingriffsmittel in dem dazwischen liegenden Freiraum angeordnet ist.

Bevorzugt sind der erste und der zweite gezahnte Abschnitt jeweils als gerade Zahnstange ausgebildet. Dadurch wird eine geradlinigen translatorischen Bewegung für den Antrieb des Generators genutzt. Alternativ können auch nicht geradlinige Bewegungen genutzt werden, wie z.B. kreisförmige oder freiförmige Bewegungen.

Die Übertragung der meist drehenden Bewegung einer Handhabe, wie z.B. eines Türdrückers oder Knaufs, in eine insbesondere geradlinige Hin- und Herbewegung des gezahnten Eingriffsmittels des Getriebes erfolgt bevorzugt mittels eines exzentrisch der Drehachse der Handhabe schwenkbar befestigten Exzenterhebels.

Um sicherzustellen, dass das oszillierend bewegte Eingriffsmittel zwischen der Hin- und der Herbewegung zu einem kontrollierten Stillstand kommt, ist bevorzugt vorgesehen, dass Anschläge zur Begrenzung der Hin- und Herbewegung des gezahnten Eingriffsmittels vorgesehen sind, wobei die Anschläge vorzugsweise von an gegenüberliegenden Seiten der gezahnten Abschnitte angeordneten, die beiden Abschnitte verbindenden Stegen gebildet sind.

Bevorzugt weisen die gezahnten Abschnitte eine solche Länge auf, dass das Gegeneingriffsmittel in den beiden Endstellungen der Hin- und Herbewegung außer Eingriff mit den gezahnten Abschnitten gelangen. Dadurch wird ein von Zähnen freier Wechselbereich des Zahnrads geschaffen, bei dem ein Eingriff des Zahnrades weder in den ersten noch in den zweiten gezahnten Abschnitt des Eingriffsmittels vorliegt und das Eingriffsmittel stillsteht. Durch diese Stillstandszeit wird sichergestellt, dass kein Doppeleingriff möglich ist und das Zahnrad sich nicht verkeilen oder verklemmen kann und dadurch stecken bleibt.

Gemäß einer weiteren bevorzugten Ausbildung des Getriebes ist das Eingriffsmittel quer zur Hin- und Herbewegung verlagerbar angeordnet, und zwar um einen Weg, welcher der Differenz zwischen dem Außen- bzw. Hüllkreisdurchmesser des Zahnrads und dem im Vergleich hierzu größeren Normalabstand der gezahnten Abschnitte voneinander entspricht. Dies ermöglicht einen Wechsel des Eingriffs des Gegeneingriffsmittels von dem ersten gezahnten Abschnitt zu dem zweiten gezahnten Abschnitt und umgekehrt.

Weiter ist bevorzugt ein Führungsmittel vorgesehen, das ausgebildet ist, um das Eingriffsmittel bei Erreichen einer Endstellung des Eingriffsmittels quer zur Hin- und Herbewegung zu verlagern, um den oben beschriebenen Wechsel des Eingriffs des Gegeneingriffsmittels von dem ersten gezahnten Abschnitt zu dem zweiten gezahnten Abschnitt und umgekehrt zu bewirken. Das Führungsmittel kann beispielswiese eine Führungsrille und einen in diese eingreifenden Führungsstift umfassen, wobei die Führungsbahn einen solchen Verlauf hat, dass die gewünschte Querverlagerung des Eingriffsmittels an den Umkehrpunkten der Hin- und Herbewegung im Sinne einer Zwangsführung bewirkt wird.

Gemäß einer bevorzugten Ausbildung ist die Handhabe über ein Freilaufelement mit dem Rotor des Generators oder dem Schwungrad gekoppelt. Dadurch kann der Rotor sich auch dann weiterdrehen, wenn die Betätigung der Handhabe abgeschlossen ist, beispielsweise, wenn sich die Handhabe oder das Eingriffsmittel in einem Umkehrpunkt der Hin- und Herbewegung, d.h. im Stillstand befindet. Das Freilaufelement ist bevorzugt zwischen dem Gegeneingriffselement und dem Rotor des Generators bzw. dem Schwungrad angeordnet.

Bevorzugt ist die Handhabe zwischen einer Ausgangsposition und einer Betätigungsposition verlagerbar und wirkt mit einem Rückstellelement, insbesondere einem Kraftspeicher zusammen, um die Handhabe von der Betätigungsposition in die Ausgangsposition rückzustellen. Dadurch wird die Rückstellbewegung der Handhabe für einen Antrieb des Generators genutzt, ohne dass dies einen aktiven Kraftaufwand durch den Benutzer erfordert.

Gemäß einem weiteren Aspekt betrifft die Erfindung eine Schließeinrichtung umfassend:
- ein Schließglied für die Betätigung eines Verriegelungselements,
- eine elektrisch betätigbare Kupplung zum wahlweisen Verbinden oder Trennen einer Drehbewegung einer Handhabe mit dem bzw. vom Schließglied,
- eine elektronische Authentifizierungseinrichtung zum Authentifizieren einer elektronischen Zutrittsberechtigung, die mit der Kupplung zusammenwirkt, um die Kupplung bei Vorliegen einer Zutrittsberechtigung zu betätigen,
- einen Energiewandler gemäß dem ersten Aspekt der Erfindung, der die Authentifizierungseinrichtung und/oder die Kupplung mit elektrischer Energie versorgt.

Die elektronische Zutrittsberechtigung kann auf einem Berechtigungsträger vorliegen, welchen der Benutzer mit sich trägt und der bei einem Zutrittswunsch von einer Leseeinrichtung der Schließeinrichtung ausgelesen wird. Der Berechtigungsträger ist bevorzugt ein Datenträger, auch Identmedium genannt, auf dem die Zutrittsberechtigungen in Form von Schlüsseldaten gespeichert sind. Das Auslesen der Zutrittsberechtigung kann drahtlos oder drahtgebunden erfolgen. Für das drahtlose Auslesen der Zutrittsberechtigung muss der Datenträger lediglich in die Nähe der Schließeinrichtung gebracht werden. Für das kontaktbehaftete Auslesen der Zutrittsberechtigung kann der Datenträger in eine Aufnahme der Schließeinrichtung, die insbesondere in oder an der Handhabe ausgebildet ist, derart eingelegt oder eingeführt werden, dass elektrische Kontakte des Datenträgers korrespondierende Gegenkontakte der Schließeinrichtung kontaktieren.

Erfindungsgemäß versorgt der elektrische Generator die Authentifizierungseinrichtung und/oder die Kupplung mit elektrischer Energie. Diese Energieversorgung kann hierbei direkt oder indirekt erfolgen. Bei der direkten Variante wird der von dem Generator erzeugte Strom so zur Verfügung gestellt, dass die Authentifizierungseinrichtung bzw. die Kupplung den Strom im Wesentlichen gleichzeitig mit der Erzeugung durch den Generator verbrauchen, wobei auf eine Speicherung des Stroms verzichtet werden kann. Bei der indirekten Variante wird wenigstens ein Teil des vom Generator erzeugten Stroms einem elektrischen Energiespeicher zugeführt, der wiederum die Authentifizierungseinrichtung bzw. die Kupplung mit elektrischer Energie versorgt. Der elektrische Energiespeicher kann insbesondere als aufladbare Batterie ausgebildet sein.

Eine bevorzugte Ausbildung sieht in diesem Zusammenhang vor, dass ein die Authentifizierungseinrichtung und/oder die Kupplung mit Strom versorgender elektrischer Energiespeicher vorgesehen ist, der von dem Generator gespeist ist.

Bevorzugt stellt der elektrische Generator die einzige Energiequelle der Schließeinrichtung dar.

Die Authentifizierungseinrichtung kann als herkömmliche elektronische Einheit ausgebildet sein, die in der Lage ist, elektronische Berechtigungsdaten zu empfangen und anhand der Berechtigungsdaten festzustellen, ob eine Zutrittsberechtigung vorliegt oder nicht. Weiters umfasst die Authentifizierungseinrichtung Mittel zum Ansteuern der elektrisch betätigbaren Kupplung.

Die erfindungsgemäße Schließeinrichtung kann verschiedene konstruktive Ausbildungen annehmen. Gemäß einer ersten Variante sind zumindest einige Komponenten der Schließeinrichtung in einen Schließzylinder integriert. Eine bevorzugte Ausbildung sieht hierbei vor, dass die Schließeinrichtung weiters einen Schließzylinder mit einem zumindest teilweise in einem Gehäuse aufgenommenen, drehbaren Zylinderkern aufweist, wobei das Schließglied bevorzugt als Schließnase ausgebildet ist und wobei die elektrisch betätigbare Kupplung, die elektronische Authentifizierungseinrichtung und der Energiewandler bevorzugt im Schließzylinder angeordnet sind.

Gemäß einer zweiten Variante sind zumindest einige Komponenten der Schließeinrichtung in einen Beschlag integriert. Eine bevorzugte Ausbildung sieht hierbei vor, dass die Schließeinrichtung einen Beschlag aufwiest, wobei das Schließglied bevorzugt zur Betätigung einer Schlossfalle ausgebildet ist und wobei die elektrisch betätigbare Kupplung, die elektronische Authentifizierungseinrichtung und der Energiewandler bevorzugt im Beschlag angeordnet sind.

Gemäß einer dritten Variante sind zumindest einige Komponenten der Schließeinrichtung in eine Handhabe integriert. Eine bevorzugte Ausbildung sieht hierbei vor, dass die elektrisch betätigbare Kupplung, die elektronische Authentifizierungseinrichtung und der Energiewandler in der Handhabe oder um die Handhabe herum angeordnet sind.

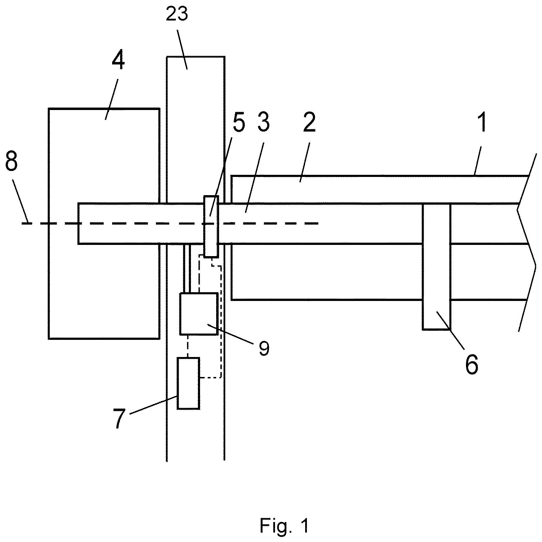

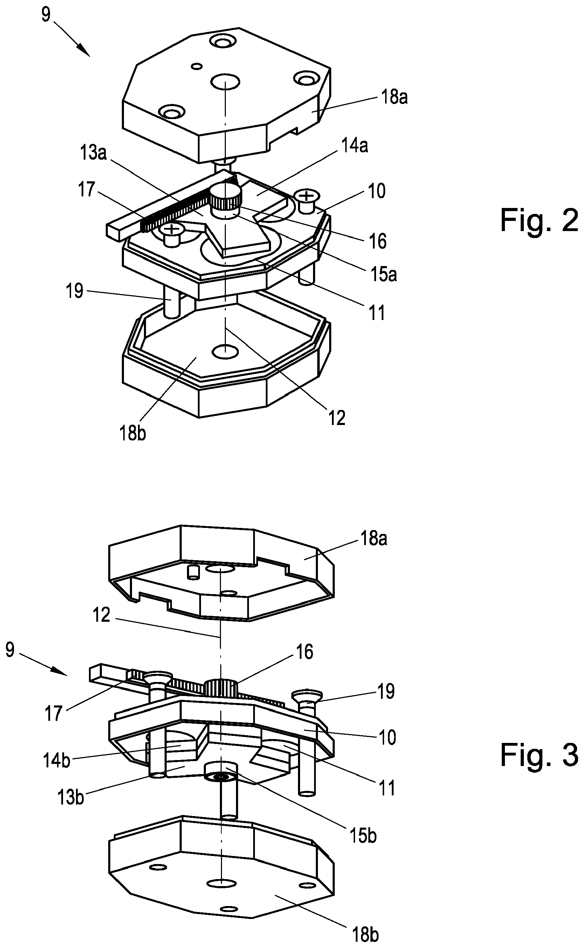

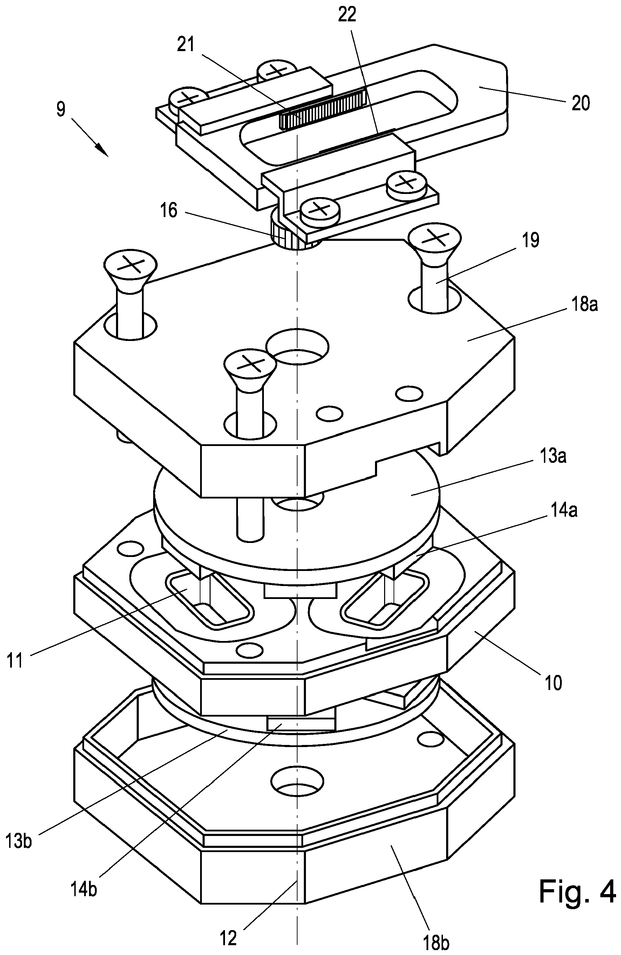

Die Erfindung wird nachfolgend anhand eines in der Zeichnung schematisch dargestellten Ausführungsbeispiels näher erläutert. In dieser zeigen Fig. 1 eine schematische Darstellung einer Schließeinrichtung mit elektronischer Zutrittsberechtigungsprüfung mit einer Handhabe, Fig. 2 eine erste Ansicht eines erfindungsgemäßen Generators für eine Schließeinrichtung nach Fig. 1, Fig. 3 eine zweite Ansicht des Generators von Fig. 2, und Fig. 4 eine abgewandelte Ausbildung des Generators.

Fig. 1 zeigt einen Schließzylinder 1, der ein feststehendes Zylindergehäuse 2 und einen darin um die Achse 8 drehbaren Zylinderkern 3 aufweist. Der Zylinderkern 3 ist mit einer Handhabe 4, wie z.B. einem Türdrücker oder einem Drehknauf, über eine bevorzugt in einem Beschlag 23 oder Teil 23 des Schließzylinders 1 angeordnete Kupplung 5 gekoppelt. Die Handhabe 4 und der Zylinderkern 3 können durch die Kupplung 5 entweder drehfest miteinander gekoppelt werden oder relativ zueinander frei drehbar sein. Der Zylinderkern 3 ist mit einer Schließnase 6 verbunden. Die Schließnase ist in einem Schloss derart angeordnet, dass sie einen Riegel oder eine Falle zwischen einer geschlossenen und einer geöffneten Position bewegen kann. Im nicht eingekuppelten Zustand der Kupplung 5 ist die Handhabe 4 frei drehbar, sodass die Schließnase 6 nicht betätigt werden kann. Zum Betätigen der Kupplung 5 ist eine Authentifizierungseinrichtung 7 vorgesehen, die in der Lage ist, Berechtigungsdaten zu empfangen und anhand der Berechtigungsdaten festzustellen, ob eine Zutrittsberechtigung vorliegt oder nicht. Im positiven Fall steuert die Authentifizierungseinrichtung 7 die Kupplung 5 über eine in Fig. 1 strichliert dargestellte Steuerleitung an.

An einer geeigneten Stelle der Schließeinrichtung, wie z.B. in dem Beschlag 23 oder Teil 23 des Schließzylinders 1, ist ein elektrischer Generator 9 angeordnet, dessen Rotor über eine nicht näher dargestellte mechanische Kopplung von der Handhabe 4 angetrieben wird. Der Generator 9 versorgt die Authentifizierungseinrichtung 7 und/oder die Kupplung 5 mit Strom, ggf. über einen nicht dargestellten Akkumulator.

Fig. 2 und 3 zeigen eine beispielhafte Ausführungsform eines Generators 9 insbesondere zur Verwendung in der Schließeinrichtung von Fig. 1. Der Generator 9 umfasst einen Spulenträger 10, der den Stator des Generators 9 ausbildet und in dem eine Mehrzahl von Spulen 11 um die Drehachse 12 verteilt angeordnet sind, wobei die Spulenachsen zur Drehachse 12 im Wesentlichen parallel verlaufen. An beiden Seiten des Spulenträgers 10 ist jeweils ein um die Drehachse 12 drehbarer Rotor 13a, 13b angeordnet, der eine Mehrzahl von um die Drehachse 12 im Wesentlichen regelmäßig verteilt angeordneten Permanentmagneten 14a, 14b trägt. Bei einer alternativen Ausführungsform kann auch nur einer der beiden Rotoren 13a, 13b mit Permanentmagneten versehen sein. Weiters kann einer der beiden Rotoren 13a, 13b gänzlich entfallen. Im vorliegenden Ausführungsbeispiel sind die Permanentmagneten 14a, 14b im Wesentlichen sternartig um die Drehachse 12 angeordnet, wobei hier bevorzugt drei Permanentmagnete 14a, 14b vorgesehen sind. Die Kugellager für die drehbare Lagerung der Rotoren 13a, 13b sind mit 15a, 15b bezeichnet. Die von den Permanentmagneten 14a, 14b ausgehenden Magnetfeldlinien durchsetzen den zwischen dem Spulenträger 10 und dem jeweiligen Rotor 13a, 13b befindlichen Luftspalt in axialer Richtung, d.h. im Wesentlichen in Richtung der Drehachse 12. Der Rotor 13a, 13b bildet hierbei jeweils einen ober bzw. unteren Magnetrückschluss.

Der Antrieb der Rotoren 13a, 13b erfolgt über ein an der Drehachse 12 befestigtes Zahnrad 16, das von einer Zahnstange 17 in Drehung versetzt wird. Die Zahnstange 17 wiederum wird durch die Betätigung der Handhabe 4 zu einer Hin- und Herbewegung angetrieben. Ein oberes und ein unteres Gehäuseteil sind mit 18a, 18b bezeichnet und bestehen bevorzugt aus Kunststoff. Weiters sind Gehäuseschrauben 19 bevorzugt aus nichtmagnetischem Material vorgesehen, welche den Spulenträger 10 durchsetzen und das obere und das Untergehäuseteil 18a, 18b zusammenhalten.

Fig. 4 zeigt eine alternative Ausbildung des Generators 9, bei der im Unterschied zur Ausbildung gemäß den Fig. 2 und 3 jeder Rotor 13a, 13b sechs Permanentmagnete 14a, 14b trägt, die im Wesentlichen sternförmig um die Drehachse 12 verteilt angeordnet sind. Der Spulenträger 10 umfasst drei Spulen 11, d.h. die Hälfte der Anzahl der Permanentmagneten 14a, 14b je Rotor. Der Rotor 13a, 13b ist scheibenförmig ausgebildet und wirkt daher als Schwungrad.

Der Antrieb der Rotoren 13a, 13b erfolgt wieder über ein Zahnrad 16, das nun aber mit einer von der Handhabe zu einer Hin- und Herbewegung angetriebenen Zahnstangengabel 20 zusammenwirkt. Die Zahnstangengabel 20 umfasst einen ersten gezahnten Abschnitt 21 und einen parallel dazu verlaufenden, gegengleich gezahnten zweiten Abschnitt 22, wobei das Zahnrad 16 für die Hinbewegung mit dem ersten gezahnten Abschnitt 21 und für die Herbewegung mit dem zweiten gezahnten Abschnitt 22 in Eingriff steht. Dadurch kann sowohl die Hin- als auch die Herbewegung der Handhabe bzw. der Zahnstangengabel 20 ohne Wechsel der Drehrichtung der Rotoren 13a, 13b für den Antrieb des Generators genutzt werden.

## Patentansprüche

1. Energiewandler zur Erzeugung elektrischer Energie für eine Schließeinrichtung, umfassend eine Handhabe (4) zur Betätigung der Schließeinrichtung und einen von der Handhabe (4) angetriebenen elektrischen Generator (9), **dadurch gekennzeichnet, dass** der elektrische Generator (9) als Axialfluss-Permanentmagnet-Generator mit wenigstens einem Stator und einem relativ dazu drehbar gelagerten Rotor (13a, 13b) ausgebildet ist und der Rotor (13a, 13b) als Schwungrad ausgebildet ist oder mit einem Schwungrad zusammenwirkt.

2. Energiewandler nach Anspruch 1, **dadurch gekennzeichnet, dass** der Stator des Generators (9) einen Spulenträger mit um eine Drehachse (12) des Rotors (13a, 13b) verteilt angeordneten Induktionsspulen (11) aufweist, deren Spulenachsen im Wesentlichen parallel zur Drehachse (12) verlaufen.

3. Energiewandler nach Anspruch 1 oder 2, **dadurch gekennzeichnet, dass** der Rotor (13a, 13b) um die Drehachse (12) verteilt angeordnete Permanentmagnete (14a, 14b) aufweist, wobei in Umfangsrichtung aufeinanderfolgende Permanentmagnete (14a, 14b) bevorzugt eine abwechselnde axiale Polarität aufweisen.

4. Energiewandler nach Anspruch 1, 2 oder 3, **dadurch gekennzeichnet, dass** der Rotor (13a, 13b) zwei im Wesentlichen koaxial angeordnete Rotorelemente aufweist, zwischen denen der Stator (10) angeordnet ist, wobei bevorzugt jedes Rotorelement um die Drehachse (12) verteilt angeordnete Permanentmagnete (14a, 14b) aufweist.

5. Energiewandler nach einem der Ansprüche 1 bis 4, **dadurch gekennzeichnet, dass** die Handhabe (4) über ein Getriebe mit dem wenigstens einen Rotor (13a, 13b) des Generators (9) gekoppelt ist, welches ein Umschaltelement aufweist, um beim Wechsel der Bewegungsrichtung der Handhabe (4) die Rotationsrichtung des Rotors (13a, 13b) beizubehalten.

6. Energiewandler nach Anspruch 5, **dadurch gekennzeichnet, dass** das Getriebe ein von der Handhabe (4) zu einer Hin- und Herbewegung angetriebenes gezahntes Eingriffsmittel (17, 20) und ein mit dem Rotor (13a, 13b) des Generators (9) drehbar gekoppeltes Gegeneingriffsmittel (16) umfasst, wobei das gezahnte Eingriffsmittel (20) einen ersten gezahnten Abschnitt (21) und einen im Wesentlichen parallel dazu verlaufenden, gegengleich gezahnten zweiten Abschnitt (22) aufweist, und das Gegeneingriffsmittel (16) für die Hinbewegung über einen ersten Drehwinkel mit dem ersten gezahnten Abschnitt (21) und für die Herbewegung über einen zweiten Drehwinkel mit dem zweiten gezahnten Abschnitt (22) in Eingriff steht.

7. Energiewandler nach Anspruch 6, **dadurch gekennzeichnet, dass** das Gegeneingriffsmittel (16) als Zahnrad mit einer Außenverzahnung ausgebildet ist.

8. Energiewandler nach Anspruch 6 oder 7, **dadurch gekennzeichnet, dass** der erste und der zweite gezahnte Abschnitt (21, 22) jeweils als im Wesentlichen gerade Zahnstange ausgebildet sind.

9. Energiewandler nach Anspruch 6, 7 oder 8, **dadurch gekennzeichnet, dass** Anschläge zur Begrenzung der Hin- und Herbewegung des gezahnten Eingriffsmittels (20) vorgesehen sind, wobei die Anschläge vorzugsweise von an im Wesentlichen gegenüberliegenden Seiten der gezahnten Abschnitte (21, 22) angeordneten, die beiden Abschnitte verbindenden Stegen gebildet sind.

10. Energiewandler nach einem der Ansprüche 6 bis 9, **dadurch gekennzeichnet, dass** die gezahnten Abschnitte (21, 22) eine solche Länge aufweisen, dass das Gegeneingriffsmittel (16) in den beiden Endstellungen der Hin- und Herbewegung außer Eingriff mit den gezahnten Abschnitten (21, 22) gelangen.

11. Energiewandler nach einem der Ansprüche 6 bis 10, **dadurch gekennzeichnet, dass** ein Führungsmittel vorgesehen ist, das ausgebildet ist, um das Eingriffsmittel (20) bei Erreichen einer Endstellung des Eingriffsmittels (20) im Wesentlichen quer zur Hin- und Herbewegung zu verlagern.

12. Energiewandler nach einem der Ansprüche 1 bis 11, **dadurch gekennzeichnet, dass** die Handhabe (4) zwischen einer Ausgangsposition und einer Betätigungsposition verlagerbar ist und mit einem Rückstellelement, insbesondere einem Kraftspeicher zusammenwirkt, um die Handhabe (4) von der Betätigungsposition in die Ausgangsposition rückzustellen.

13. Energiewandler nach einem der Ansprüche 1 bis 12, **dadurch gekennzeichnet, dass** die Handhabe (4) als Türdrücker oder Türknauf ausgebildet ist.

14. Energiewandler nach einem der Ansprüche 1 bis 13, **dadurch gekennzeichnet, dass** die Handhabe (4) über ein Freilaufelement mit dem Rotor (13a, 13b) des Generators (9) oder/und dem Schwungrad gekoppelt ist.

15. Energiewandler nach Anspruch 14, **dadurch gekennzeichnet, dass** das Freilaufelement zwischen dem Gegeneingriffselement (16) und dem Rotor (13a, 13b) des Generators (9) bzw. dem Schwungrad angeordnet ist.

16. Schließeinrichtung umfassend
- ein Schließglied (6) für die Betätigung eines Verriegelungselements,
- eine elektrisch betätigbare Kupplung (5) zum wahlweisen Verbinden oder Trennen einer Drehbewegung einer Handhabe (4) mit dem bzw. vom Schließglied (6),
- eine elektronische Authentifizierungseinrichtung (7) zum Authentifizieren einer elektronischen Zutrittsberechtigung, die mit der Kupplung (5) zusammenwirkt, um die Kupplung (5) bei Vorliegen einer Zutrittsberechtigung zu betätigen,
- einen Energiewandler nach einem der Ansprüche 1 bis 15, der die Authentifizierungseinrichtung (7) und/oder die Kupplung (5) mit elektrischer Energie versorgt.

17. Schließeinrichtung nach Anspruch 16, **dadurch gekennzeichnet, dass** die Schließeinrichtung weiters einen Schließzylinder (1) mit einem zumindest teilweise in einem Gehäuse (2) aufgenommenen, drehbaren Zylinderkern (3) aufweist, wobei das Schließglied bevorzugt als Schließnase (6) ausgebildet ist und wobei die elektrisch betätigbare Kupplung (5), die elektronische Authentifizierungseinrichtung (7) und der Energiewandler bevorzugt im Schließzylinder angeordnet sind.

18. Schließeinrichtung nach Anspruch 16, **dadurch gekennzeichnet, dass** die Schließeinrichtung einen Beschlag aufweist, wobei das Schließglied bevorzugt zur Betätigung einer Schlossfalle ausgebildet ist und wobei die elektrisch betätigbare Kupplung (5), die elektronische Authentifizierungseinrichtung (7) und der Energiewandler bevorzugt im Beschlag angeordnet sind.

19. Schließeinrichtung nach Anspruch 16, **dadurch gekennzeichnet, dass** die elektrisch betätigbare Kupplung (5), die elektronische Authentifizierungseinrichtung (7) und der Energiewandler in der Handhabe (4) oder um die Handhabe (4) herum angeordnet sind.
